# EUROPEAN PATENT APPLICATION

(11) **EP 4 102 499 A1**
(43) Date of publication of application: **14.12.2022**
(21) Application number: 22175792.5
(22) Date of filing: 27.05.2022
(51) Int. Cl.: G10L 15/01

(54) **WAKEUP TESTING METHOD AND APPARATUS, ELECTRONIC DEVICE AND READABLE STORAGE MEDIUM**

(30) Priority: 08.06.2021 CN 202110637550
(71) Applicant: Apollo Intelligent Connectivity (Beijing) Technology Co., Ltd., Beijing 100176 (CN)
(72) Inventor: LIU, Rong, Beijing, 100176 (CN)
(74) Representative: dompatent von Kreisler Selting Werner - Partnerschaft von Patent- und Rechtsanwälten mbB

(57) **Abstract**

The present discloses a wakeup testing method and apparatus, an electronic device and a readable storage medium, and relates to technical fields of automatic driving and intelligent transportation. The wakeup testing method includes: acquiring a plurality of wakeup audios; playing the plurality of wakeup audios in a vehicle, and configuring a noise environment during the playing of each wakeup audio; and obtaining, according to wakeup results of at least one to-be-tested vehicle-mounted client in the vehicle for different wakeup audios, wakeup rates of the at least one to-be-tested vehicle-mounted client. The present disclosure can reduce costs of wakeup testing and improve accuracy of wakeup testing.

## Description

### Field of the Disclosure

The present disclosure relates to the technical field of data processing, and in particular, to technical fields such as automatic driving and intelligent transportation. A wakeup testing method and apparatus, an electronic device and a readable storage medium are provided.

### Background of the Disclosure

In the prior art, when wakeup performance of a vehicle-mounted client mounted in a vehicle and having a voice wakeup function is tested, the wakeup performance is generally tested in the vehicle by a tester, which leads of high costs of wakeup testing. Moreover, test results may be affected by the tester's own reasons, leading to low accuracy of the test results.

### Summary of the Disclosure

The present disclosure provides a wakeup testing method and apparatus, an electronic device and a readable storage medium to improve accuracy of wakeup testing and reduce costs of wakeup testing.

According to a first aspect of the present disclosure, a wakeup testing method is provided, including: acquiring a plurality of wakeup audios; playing the plurality of wakeup audios in a vehicle, and configuring a noise environment during the playing of each wakeup audio; and obtaining, according to wakeup results of at least one to-be-tested vehicle-mounted client in the vehicle for different wakeup audios, wakeup rates of the at least one to-be-tested vehicle-mounted client.

According to a second aspect of the present disclosure, a wakeup testing apparatus is provided, including: an acquisition unit configured to acquire a plurality of wakeup audios; a playing unit configured to play the plurality of wakeup audios in a vehicle, and configure a noise environment during the playing of each wakeup audio; and a processing unit configured to obtain, according to wakeup results of at least one to-be-tested vehicle-mounted client in the vehicle for different wakeup audios, wakeup rates of the at least one to-be-tested vehicle-mounted client.

According to a third aspect of the present disclosure, an electronic device is provided, including: at least one processor; and a memory in communication connection with the at least one processor; wherein the memory stores instructions executable by the at least one processor, and the instructions are executed by the at least one processor to enable the at least one processor to perform the method as described above.

According to a fourth aspect of the present disclosure, a non-transitory computer-readable storage medium storing computer instructions is provided, wherein the computer instructions are configured to cause a computer to perform the method as described above.

According to a fifth aspect of the present disclosure, a computer program product including a computer program is provided, wherein, when the computer program is executed by a processor, the method as described above is performed.

As can be seen from the above technical solutions, in the present disclosure, a noise environment is configured while a vehicle plays wakeup audios, so that different scenarios can be simulated realistically when the vehicle is running, which further improves the accuracy of the wakeup rate of the to-be-tested vehicle-mounted client and does not require relevant personnel to perform field testing, thereby reducing costs of wakeup testing.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a schematic diagram of a first embodiment according to the present disclosure;
FIG. 2 is a schematic diagram of a second embodiment according to the present disclosure;
FIG. 3 is a schematic diagram of a third embodiment according to the present disclosure; and
FIG. 4 is a block diagram of an electronic device configured to perform a wakeup testing method according to embodiments of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

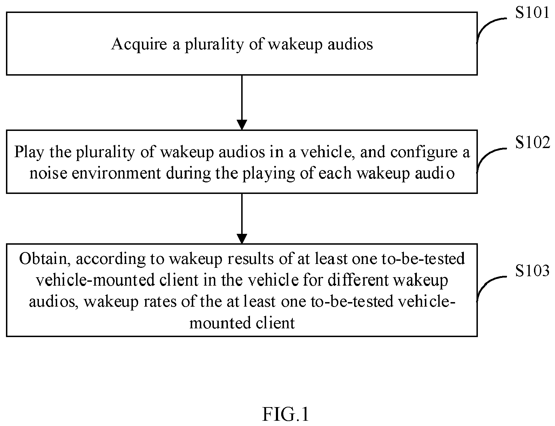

FIG. 1 is a schematic diagram of a first embodiment according to the present disclosure. As shown in FIG. 1, a wakeup testing method according to this embodiment may specifically include the following steps.

In S101, a plurality of wakeup audios is acquired.

In S102, the plurality of wakeup audios is played in a vehicle, and a noise environment is configured during the playing of each wakeup audio.

In S103, according to wakeup results of at least one to-be-tested vehicle-mounted client in the vehicle for different wakeup audios, wakeup rates of the at least one to-be-tested vehicle-mounted client are obtained.

In the wakeup testing method according to the present disclosure, a noise environment is configured while a vehicle plays wakeup audios, so that different scenarios can be simulated realistically when the vehicle is running, which further improves the accuracy of the wakeup rate of the to-be-tested vehicle-mounted client and does not require relevant personnel to perform field testing, thereby reducing costs of wakeup testing.

In this embodiment, wakeup testing is performed on a vehicle-mounted client, specifically a client mounted in a vehicle and having a voice wakeup function. In this embodiment, the to-be-tested vehicle-mounted client may be a client of a voice assistant of the vehicle or clients of an intelligent rearview mirror and a traffic recorder on the vehicle.

In this embodiment, the plurality of wakeup audios acquired by performing S101 is specifically audio data corresponding to different wakeup words. The to-be-tested client in the vehicle is wake up by using the acquired wakeup audios.

Specifically, in this embodiment, the plurality of wakeup audios acquired by performing S101 is pre-recorded in the following manner: recording audio data corresponding to different wakeup words in a mute environment, for example, in a quiet room or a quiet conference room, recording audio data issued by different testers for different wakeup words; and obtaining the wakeup audios after the recorded audio data is preprocessed. That is, no associated noise is bound to the wakeup audios obtained in this embodiment.

In this embodiment, when S101 is performed to preprocess the recorded audio data, the following optional implementation manner may be adopted: eliminating noise floor from the recorded audio data. That is, this embodiment can prevent the interference of noise in the wakeup audios when the vehicle plays the acquired wakeup audios, so as to improve the accuracy of wakeup testing.

In this embodiment, when S101 is performed to preprocess the recorded audio data, the following optional implementation manner may be adopted: acquiring sound energy of the recorded audio data, the acquired sound energy representing sizes of voices in the audio data; and adjusting the sound energy of the acquired audio data to a preset range.

That is, in this embodiment, the plurality of wakeup audios acquired by performing S101 has sound energy in the preset range. That is, different wakeup audios have similar sound sizes, thereby preventing the problem that accuracy of wakeup testing is affected by different sound sizes of the wakeup audios.

It may be understood that, in this embodiment, when S101 is performed to preprocess the audio data, the audio data may be preprocessed by noise floor elimination and sound energy adjustment simultaneously.

In this embodiment, when S101 is performed to acquire the plurality of wakeup audios, S102 is performed to play the plurality of wakeup audios in a vehicle, and configure a noise environment during the playing of each wakeup audio.

In this embodiment, when S102 is performed to play the plurality of wakeup audios in a vehicle, the following optional implementation manner may be adopted: playing the plurality of wakeup audios through an artificial mouth located at a preset position of the vehicle.

The preset position where the artificial mouth in this embodiment is located may be a position of a driver in the vehicle or a position of a passenger in the vehicle. In this embodiment, S102 is performed to play the wakeup audios through the artificial mouth, so that a playing effect of the wakeup audios is closer to a speaking effect of a real mouth, so as to be closer to sound made by the driver or the passenger in a real scenario.

In this embodiment, the noise environment configured during the playing of each wakeup audio by performing S102 may include at least one of an air conditioner size, music playing and pause, vehicle running noise, and other voices.

In this embodiment, when S102 is performed to configure a noise environment during the playing of each wakeup audio, corresponding interfaces in the vehicle may be called to control turn-on, turn-off and temperature adjustment of an air conditioner in the vehicle, or control turn-on and turn-off of a stereo in the vehicle, so as to configure different noise environments.

Specifically, in this embodiment, when S102 is performed to configure a noise environment during the playing of each wakeup audio, the following optional implementation manner may be adopted: configuring a same noise environment during the playing of each wakeup audio.

That is, in this embodiment, a same noise environment is configured during the playing of each wakeup audio, so that the influence of different noise environments on wakeup testing can be prevented, thereby further improving the accuracy of wakeup testing.

In this embodiment, after S102 is performed to play the plurality of wakeup audios in a vehicle and configure a noise environment during the playing of each wakeup audio, S103 is performed to obtain, according to wakeup results of at least one to-be-tested vehicle-mounted client in the vehicle for different wakeup audios, wakeup rates of the at least one to-be-tested vehicle-mounted client.

The to-be-tested vehicle-mounted client in this embodiment may generate wakeup results according to the received wakeup audios, and the generated wakeup results include one of successful wakeups and failed wakeups.

The at least one to-be-tested vehicle-mounted client in this embodiment may be clients of different devices mounted in the vehicle, such as an intelligent rearview mirror, an automobile data recorder and an in-vehicle voice assistant; or different versions of a client of a same device mounted in the vehicle, such as different versions of the in-vehicle voice assistant. That is, this embodiment can realize wakeup comparative testing between different devices or realize wakeup comparative testing between different versions of a same device.

In this embodiment, when S103 is performed to obtain, according to wakeup results of at least one to-be-tested vehicle-mounted client in the vehicle for different wakeup audios, wakeup rates of the at least one to-be-tested vehicle-mounted client, the following optional implementation manner may be adopted: for each to-be-tested vehicle-mounted client, taking a ratio between a number of successful wakeups when the to-be-tested vehicle-mounted client processes the plurality of wakeup audios and a total number of wakeups as the wakeup rate of the to-be-tested vehicle-mounted client.

In this embodiment, after S103 is performed to obtain wakeup rates of the at least one to-be-tested vehicle-mounted client, the following content may also be included: comparing the wakeup rates of the to-be-tested vehicle-mounted clients; and determining wakeup performance of the to-be-tested vehicle-mounted clients according to a comparison result.

In this embodiment, when S103 is performed to compare the wakeup rates of the to-be-tested vehicle-mounted clients, the to-be-tested vehicle-mounted clients may be sorted in descending order of the wakeup rates. A sorting result is taken as wakeup performance of each to-be-tested vehicle-mounted client. The smaller the value of the sorting result is, the stronger the wakeup performance of the to-be-tested vehicle-mounted client is.

In this embodiment, when S103 is performed to compare the wakeup rates of the to-be-tested vehicle-mounted clients, one of the to-be-tested vehicle-mounted clients may be selected as a comparison object, a difference between wakeup rates of other to-be-tested vehicle-mounted clients and the comparison object is calculated, and the calculated difference is taken as wakeup performance of each to-be-tested vehicle-mounted client.

Since a same wakeup audio is used for wakeup testing on different to-be-tested vehicle-mounted clients, this embodiment can further improve accuracy of comparison between the different to-be-tested vehicle-mounted clients.

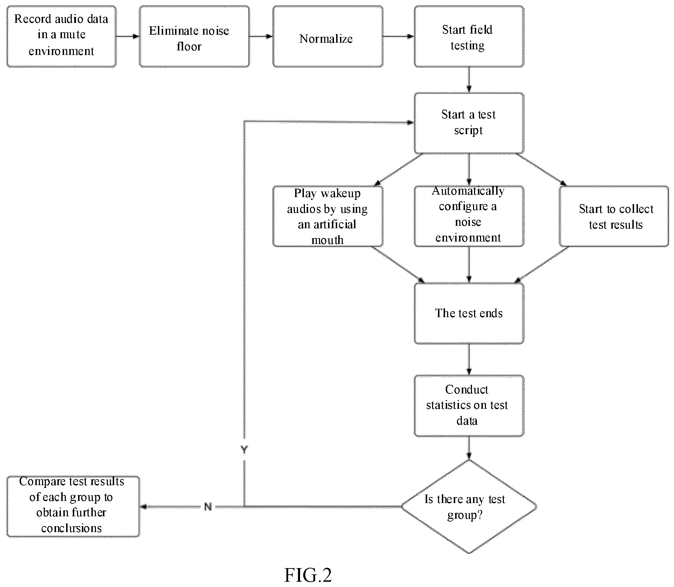

FIG. 2 is a schematic diagram of a second embodiment according to the present disclosure. FIG. 2 is a flowchart of wakeup testing according to this embodiment. Wakeup audios are recorded in a mute environment. After noise floor elimination and normalization are performed on the recorded wakeup audios (that is, sound energy of the wakeup audios is adjusted to a preset range), a field testing is started. A test script is started, and operations including playing the wakeup audios by using an artificial mouth, configuring a noise environment and collecting wakeup results are performed. At the end of the test, test data statistics is performed, namely, wakeup rates are obtained according to the wakeup results. If other test groups (that is, other to-be-tested vehicle-mounted clients) exist, the step of starting a test script is performed until no other test groups exist. Finally, test results of different test groups are compared to obtain further conclusions (such as wakeup performance).

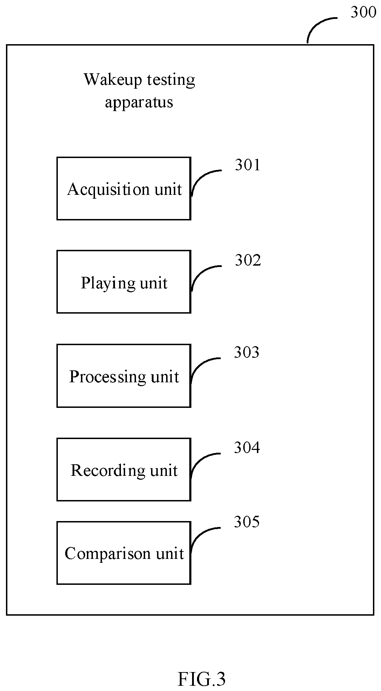

FIG. 3 is a schematic diagram of a third embodiment according to the present disclosure. As shown in FIG. 3, a wakeup testing apparatus 300 according to this embodiment may specifically include:
an acquisition unit 301 configured to acquire a plurality of wakeup audios;
a playing unit 302 configured to play the plurality of wakeup audios in a vehicle, and configure a noise environment during the playing of each wakeup audio; and
a processing unit 303 configured to obtain, according to wakeup results of at least one to-be-tested vehicle-mounted client in the vehicle for different wakeup audios, wakeup rates of the at least one to-be-tested vehicle-mounted client.

In this embodiment, the plurality of wakeup audios acquired by the acquisition unit 301 is specifically audio data corresponding to different wakeup words. The to-be-tested client in the vehicle is waked up by using the acquired wakeup audios.

The wakeup testing apparatus 300 according to this embodiment may further include a recording unit 304 configured to pre-record the plurality of wakeup audios in the following manner: recording audio data corresponding to different wakeup words in a mute environment; and preprocessing the audio data to obtain the wakeup audios. That is, no associated noise is bound to the wakeup audios obtained by the recording unit 304.

When the recording unit 304 preprocesses the recorded audio data, the following optional implementation manner may be adopted: eliminating noise floor from the recorded audio data.

When the recording unit 304 preprocesses the recorded audio data, the following optional implementation manner may be adopted: acquiring sound energy of the recorded audio data; and adjusting the sound energy of the acquired audio data to a preset range.

It may be understood that, when the recording unit 304 preprocesses the audio data, the audio data may be preprocessed by noise floor elimination and sound energy adjustment simultaneously.

In this embodiment, after the acquisition unit 301 acquires the plurality of wakeup audios, the playing unit 302 plays the plurality of wakeup audios in a vehicle, and configures a noise environment during the playing of each wakeup audio.

When the playing unit 302 plays the plurality of wakeup audios in a vehicle, the following optional implementation manner may be adopted: playing the plurality of wakeup audios through an artificial mouth located at a preset position of the vehicle.

The preset position where the artificial mouth in this embodiment is located may be a position of a driver in the vehicle or a position of a passenger in the vehicle. The playing unit 302 plays the wakeup audios through the artificial mouth, so that a playing effect of the wakeup audios is closer to a speaking effect of a real mouth, so as to be closer to sound made by the driver or the passenger in a real scenario.

The noise environment configured during the playing of each wakeup audio by the playing unit 302 may include at least one of an air conditioner size, music playing and pause, vehicle running noise, and other voices.

When the playing unit 302 configures a noise environment during the playing of each wakeup audio, corresponding interfaces in the vehicle may be called to control turn-on, turn-off and temperature adjustment of an air conditioner in the vehicle, or control turn-on and turn-off of a stereo in the vehicle, so as to configure different noise environments.

Specifically, when the playing unit 302 configures a noise environment during the playing of each wakeup audio, the following optional implementation manner may be adopted: configuring a same noise environment during the playing of each wakeup audio.

That is, the playing unit 302 configures a same noise environment during the playing of each wakeup audio, so that the influence of different noise environments on wakeup testing can be prevented, thereby further improving the accuracy of wakeup testing.

In this embodiment, after the playing unit 302 plays the plurality of wakeup audios in a vehicle and configures a noise environment during the playing of each wakeup audio, the processing unit 303 obtains, according to wakeup results of at least one to-be-tested vehicle-mounted client in the vehicle for different wakeup audios, wakeup rates of the at least one to-be-tested vehicle-mounted client.

When the processing unit 303 obtains, according to wakeup results of at least one to-be-tested vehicle-mounted client in the vehicle for different wakeup audios, wakeup rates of the at least one to-be-tested vehicle-mounted client, the following optional implementation manner may be adopted: for each to-be-tested vehicle-mounted client, taking a ratio between a number of successful wakeups when the to-be-tested vehicle-mounted client processes the plurality of wakeup audios and a total number of wakeups as the wakeup rate of the to-be-tested vehicle-mounted client.

The wakeup testing apparatus 300 according to this embodiment may further include a comparison unit 305 configured to, after the processing unit 303 obtains the wakeup rates of the at least one to-be-tested vehicle-mounted client, compare the wakeup rates of the to-be-tested vehicle-mounted clients; and determine wakeup performance of the to-be-tested vehicle-mounted clients according to a comparison result.

When the comparison unit 305 compares the wakeup rates of the to-be-tested vehicle-mounted clients, the to-be-tested vehicle-mounted clients may be sorted in descending order of the wakeup rates. A sorting result is taken as wakeup performance of each to-be-tested vehicle-mounted client. The smaller the value of the sorting result is, the stronger the wakeup performance of the to-be-tested vehicle-mounted client is.

When the comparison unit 305 compares the wakeup rates of the to-be-tested vehicle-mounted clients, one of the to-be-tested vehicle-mounted clients may be selected as a comparison object, a difference between wakeup rates of other to-be-tested vehicle-mounted clients and the comparison object is calculated, and the calculated difference is taken as wakeup performance of each to-be-tested vehicle-mounted client.

Since a same wakeup audio is used for wakeup testing on different to-be-tested vehicle-mounted clients, the comparison unit 305 can further improve accuracy of comparison between the different to-be-tested vehicle-mounted clients.

According to embodiments of the present disclosure, the present disclosure further provides an electronic device, a readable storage medium and a computer program product.

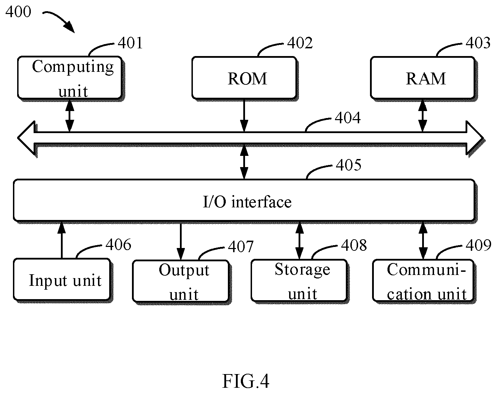

FIG. 4 is a block diagram of an electronic device configured to perform a wakeup testing method according to embodiments of the present disclosure. The electronic device is intended to represent various forms of digital computers, such as laptops, desktops, workbenches, personal digital assistants, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 6, the device 400 includes a computing unit 401, which may perform various suitable actions and processing according to a computer program stored in a read-only memory (ROM) 402 or a computer program loaded from a storage unit 408 into a random access memory (RAM) 403. The RAM 403 may also store various programs and data required to operate the device 400. The computing unit 401, the ROM 402 and the RAM 403 are connected to one another by a bus 404. An input/output (I/O) interface 405 is also connected to the bus 404.

A plurality of components in the device 400 are connected to the I/O interface 405, including an input unit 406, such as a keyboard and a mouse; an output unit 407, such as various displays and speakers; a storage unit 408, such as disks and discs; and a communication unit 409, such as a network card, a modem and a wireless communication transceiver. The communication unit 409 allows the device 400 to exchange information/data with other devices over computer networks such as the Internet and/or various telecommunications networks.

The computing unit 401 may be a variety of general-purpose and/or special-purpose processing components with processing and computing capabilities. Some examples of the computing unit 401 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 401 performs the methods and processing described above, such as the wakeup testing method. For example, in some embodiments, the wakeup testing method may be implemented as a computer software program that is tangibly embodied in a machine-readable medium, such as the storage unit 408.

In some embodiments, part or all of a computer program may be loaded and/or installed on the device 400 via the ROM 402 and/or the communication unit 409. One or more steps of the wakeup testing method described above may be performed when the computer program is loaded into the RAM 403 and executed by the computing unit 401. Alternatively, in other embodiments, the computing unit 401 may be configured to perform the wakeup testing method described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a load programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, a random access memory (RAM), a read-only memory (ROM), an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A wakeup testing method, **characterized by** comprising:
acquiring (S101) a plurality of wakeup audios;
playing (S102) the plurality of wakeup audios in a vehicle, and configuring (S102) a noise environment during the playing of each wakeup audio; and
obtaining (S103), according to wakeup results of at least one to-be-tested vehicle-mounted client in the vehicle for different wakeup audios, wakeup rates of the at least one to-be-tested vehicle-mounted client.

2. The method according to claim 1, further comprising: pre-recording the plurality of wakeup audios in the following manner:
recording audio data corresponding to different wakeup words in a mute environment; and
preprocessing the audio data to obtain the wakeup audios.

3. The method according to claim 2, wherein the step of preprocessing the audio data comprises:
acquiring sound energy of the audio data; and
adjusting the sound energy of the audio data to a preset range.

4. The method according to claim 1, wherein the step of playing the plurality of wakeup audios in a vehicle comprises:
playing the plurality of wakeup audios through an artificial mouth located at a preset position of the vehicle.

5. The method according to claim 1, wherein the step of configuring a noise environment during the playing of each wakeup audio comprises:
configuring a same noise environment during the playing of each wakeup audio.

6. The method according to claim 1, further comprising:
after the wakeup rates of the at least one to-be-tested vehicle-mounted client are obtained, comparing the wakeup rates of the to-be-tested vehicle-mounted clients; and
determining wakeup performance of the to-be-tested vehicle-mounted clients according to a comparison result.

7. A wakeup testing apparatus (300), **characterized by** comprising:
an acquisition unit (301) configured to acquire a plurality of wakeup audios;
a playing unit (302) configured to play the plurality of wakeup audios in a vehicle, and configure a noise environment during the playing of each wakeup audio; and
a processing unit (303) configured to obtain, according to wakeup results of at least one to-be-tested vehicle-mounted client in the vehicle for different wakeup audios, wakeup rates of the at least one to-be-tested vehicle-mounted client.

8. The apparatus (300) according to claim 7, further comprising a recording unit (304) configured to pre-record the plurality of wakeup audios in the following manner:
recording audio data corresponding to different wakeup words in a mute environment; and
preprocessing the audio data to obtain the wakeup audios.

9. The apparatus (300) according to claim 8, wherein, when preprocessing the audio data, the recording unit (304) is specifically configured to:
acquire sound energy of the audio data; and
adjust the sound energy of the audio data to a preset range.

10. The apparatus (300) according to claim 7, wherein, when playing the plurality of wakeup audios in a vehicle, the playing unit (302) is specifically configured to:
play the plurality of wakeup audios through an artificial mouth located at a preset position of the vehicle.

11. The apparatus (300) according to claim 7, wherein, when configuring a noise environment during the playing of each wakeup audio, the playing unit (302) is specifically configured to:
configure a same noise environment during the playing of each wakeup audio.

12. The apparatus (300) according to claim 7, further comprising a comparison unit (305) configured to:
after the wakeup rates of the at least one to-be-tested vehicle-mounted client are obtained, compare the wakeup rates of the to-be-tested vehicle-mounted clients; and
determine wakeup performance of the to-be-tested vehicle-mounted clients according to a comparison result.

13. An electronic device, comprising:
at least one processor; and
a memory in communication connection with the at least one processor; wherein
the memory stores instructions executable by the at least one processor, and the instructions are executed by the at least one processor to enable the at least one processor to perform the method according to any one of claims 1-6.

14. A non-transitory computer-readable storage medium storing computer instructions, wherein the computer instructions are configured to cause a computer to perform the method according to any one of claims 1-6.

15. A computer program product, comprising a computer program, wherein, when the computer program is executed by a processor, the method according to any one of claims 1-6 is performed.
